**Europäisches Patentamt**

**European Patent Office**

**Office européen des brevets**

(19)

(11) Veröffentlichungsnummer : **0 391 839 B1**

(12) # EUROPÄISCHE PATENTSCHRIFT

(45) Veröffentlichungstag der Patentschrift :
**03.06.92 Patentblatt 92/23**

(51) Int. Cl.$^5$ : **C02F 1/20, F23C 11/00**

(21) Anmeldenummer : **90810208.0**

(22) Anmeldetag : **15.03.90**

(54) **Verfahren zum Anfahren eines Prozesses zum Deoxidieren von Wasser, insbesondere von Meerwasser.**

(30) Priorität : **05.04.89 CH 1252/89**

(43) Veröffentlichungstag der Anmeldung :
**10.10.90 Patentblatt 90/41**

(45) Bekanntmachung des Hinweises auf die
Patenterteilung :
**03.06.92 Patentblatt 92/23**

(84) Benannte Vertragsstaaten :
**CH DE ES FR GB IT LI NL**

(56) Entgegenhaltungen :
**GB-A- 2 127 711**
**US-A- 4 445 570**

(56) Entgegenhaltungen :
**CHEMICAL ABSTRACTS, Band 88, Nr. 24, 12.
Juni 1978, Seite 487, Zusammenfassung Nr.
177820k, Columbus, Ohio, US; & JP-A-7803 971
(OSAKA OXYGEN INDUSTRIES, LTD) 14-
01-1978**

(73) Patentinhaber : **GEBRÜDER SULZER
AKTIENGESELLSCHAFT**
**Zürcherstrasse 9**
**CH-8401 Winterthur (CH)**

(72) Erfinder : **Mandrin, Charles, Dr.**
**Im Laubegg 7**
**CH-8406 Winterthur (CH)**
Erfinder : **Keller, René**
**Müliwiesstrasse 49**
**CH-8487 Zell (CH)**

## Beschreibung

Die Erfindung betrifft ein Verfahren zum Anfahren eines Prozesses zum Deoxidieren von Wasser, insbesondere von Meerwasser, welches in Oelfelder eingespritzt wird gemäss Oberbegriff des Anspruchs 1.

Es ist bekannt, Oel aus Oelfeldern bzw. Oelquellen mittels Druckgas oder Druckwasser auszupressen. Häufig befinden sich derartige Oelreserven unterhalb des Meeresgrundes. Das Oel wird in diesen Fällen insbesondere mit Hilfe von Anlagen, die auf künstlichen Inseln, sogenannten platforms (Bohrinseln), gegebenenfalls aber auch auf Schiffen montiert sein können, gewonnen.

Natürliches Meerwasser enthält ca. 10 ppm gelösten Sauerstoff, entsprechend dem Partialdruck des Sauerstoffes in der Atmosphäre. Da dieser Sauerstoffgehalt des Meerwassers für den vorstehend genannten Verwendungszweck unzulässig hoch ist, insbesondere wegen der durch ihn bewirkten äusserst aggressiven Korrosion der Anlagenteile und Leitungen, aber auch wegen einer Verstopfungsgefahr durch sich bei diesem Sauerstoffgehalt in grossem Masse entwickelnden Algen, ist es erforderlich, das benötigte Meerwasser weitgehend, d.h. bis mindestens auf 20 ppb Sauerstoffgehalt zu deoxidieren.

Für die Deoxidierung von Meerwasser sind verschiedene Verfahren bekannt.

Insbesondere soll die Erfindung auf solche Verfahren und Anlagen Anwendung finden, wie sie im schweizerischen Patentgesuch 00287/88-8 beschrieben und dargestellt sind.

Speziell auf Bohrinseln und Bohrschiffen spielen Gewicht und Abmessungen derartiger Anlagen eine wesentliche Rolle. Die in dem vorstehend zitierten schweizerischen Patentgesuch beschriebenen Anlagen besitzen ein wesentlich geringeres Gewicht als bisher übliche Anlagen und erfordern wesentlich kleinere Abmessungen, wobei weiterhin weniger Komponenten erforderlich sind. Ausserdem kann der Verbrauch von gasförmigem Treibmittel auf ein Minimum beschränkt werden.

Wenn es auch von besonderem Vorteil ist, die Erfindung für sich unterhalb des Meeresgrundes befindende Oelquellen anzuwenden, wie vorstehend ausgeführt wird, so soll die Erfindung auch auf dem Festland installierte Anlagen, die zur Oelförderung aus Oelquellen dienen, die sich unterhalb der Erdoberfläche befinden, umfassen. In diesem Fall kann als Fördermittel gegebenenfalls auch Süsswasser dienen, welches vor der Injektion in die Oelquellen ebenfalls deoxidiert werden muss.

Die Aufgabe der Erfindung besteht darin, den katalytischen Verbrennungsprozess des mit Sauerstoff während des Kontaktes mit Wasser beladenen, gasförmigen Treibmittels, wie z.B. Erdgas oder Stickstoff bei möglichst tiefen Temperaturen durchzuführen, z.B. in einem Temperaturbereich von maximal wenigen 100°C, wobei im Betriebszustand der Deoxidierungsanlage Erdgas bzw. mindestens Erdgas als Komponente enthaltender Brennstoff eingesetzt werden soll.

Für Prozesse, wie sie die Erfindung betrifft, wird vorteilhaft ein Katalysatorbett verwendet, das aus einer Schüttung aus Aluminiumoxydträgerteilchen, z.B. kleinen Zylinderkörperchen besteht, in welche Katalysatorteilchen aus Platin oder Palladium eingesintert sind.

Wesentliche Vorteile der Durchführung der katalytischen Verbrennung bei tiefen Temperaturen bestehen insbesondere darin, dass bei den die Erfindung betreffenden Deoxidierungsprozessen von Wasser die Empfindlichkeit des Katalysatormaterials in bezug auf die relativ geringen Sauerstoffkonzentrationen des beladenen Treibmittels gross ist, und dass wesentlich geringere Sauerstoffkonzentrationen des Treibmittels bei der Verbrennung erzielt werden können. Schliesslich weist das Katalysatormaterial eine wesentlich längere Lebensdauer als bei hohen Temperaturen auf.

Weiterhin ist es auch aus Sicherheitsgründen bei derartigen Anlagen wesentlich, dass die Verbrennungstemperaturen möglichst gering gehalten werden, da z.B. bei heissen Gasleitungen, beispielsweise durch Eindringen von Erdgas aus der Umgebung, diese zerstört werden können. Schliesslich ist es allgemein aus metallurgischen Gründen wünschenswert, dass in den Leitungen und Apparaten der Gesamtanlage keine zu hohen Temperaturen erzielt werden.

Unter den vorstehend angegebenen Bedingungen ist meistens zwar ein Dauerbetrieb einer Anlage mit Erdgas bzw. Erdgas als Komponente enthaltendes Brenngas möglich, jedoch nicht die Zündung des katalytischen Verbrennungsprozesses.

Die an vorstehender Stelle angegebene Aufgabe der Erfindung wird mit Hilfe der im Kennzeichen des Anspruchs 1 angegebenen Massnahmen gelöst.

Für den Anfahrprozess kann vorteilhaft Methanol oder auch Wasserstoff verwendet werden. Ein gewisser Methanolvorrat ist stets auf Bohrinseln oder Schiffen, schon aus Gründen, eine Vereisung des Leitungssystems bei gewissen Betriebszuständen der Anlage zu verhindern, vorhanden.

Ein Dauerbetrieb mit Methanoldampf als Brennmedium wäre jedoch insbesondere aus Kostengründen und auch aus Versorgungsgründen nicht wünschenswert.

Bei Verwendung von Wasserstoff als Brenngas während des Anfahrens kann dieser beispielsweise aus Flaschen bezogen werden, da nur relativ geringe Mengen erforderlich sind.

Für Dauerbetrieb ist Wasserstoff als Brenngas wegen der Gewinnung in einem Elektrolyseur nicht empfehlenswert. Ein Elektrolyseur würde die Anlage wesentlich verteuern und auch Platz- und Gewichtsprobleme aufwerfen.

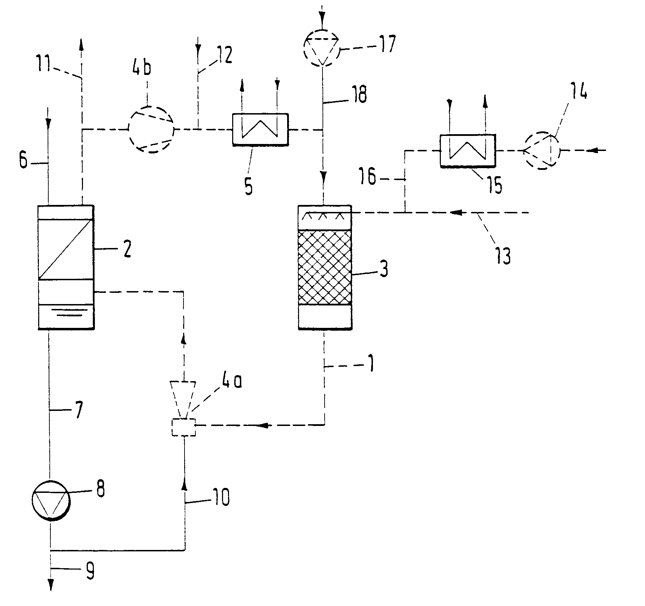

Die Erfindung wird im folgenden anhand eines in der Zeichnung schematisch dargestellten Fliessschemas eines Ausführungsbeispiels erläutert.

Im Ausführungsbeispiel weist die Anlage zur Durchführung einer Deoxidation von Wasser, insbesondere Meerwasser einen Kreislauf 1 für ein gasförmiges Treibmittel, z.B. Erdgas oder Stickstoff auf.

Im Kreislauf 1 sind im wesentlichen eine Entgasungskolonne 2 für Meerwasser, eine katalytische Verbrennungsvorrichtung 3 und eine Strahlpumpe 4a oder ein Gebläse 4b, sowie eine Heizvorrichtung 5 angeordnet.

Die Entgasungskolonne 2 ist im vorliegenden Fall als Gegenstromextraktionskolonne ausgebildet und kann in bekannter Weise Packungskörper aufweisen, wie sie beispielsweise in den schweizerischen Patentschriften 398 503 und 617 357 beschrieben sind oder eine Füllkörperschüttung, die beispielsweise aus Raschigringen besteht.

Es sei jedoch darauf hingewiesen, dass die Erfindung auch andere Kontaktvorrichtungen für Meerwasser und Treibmittel umfassen soll, beispielsweise statische Mischvorrichtungen mit anschliessenden Trennvorrichtungen, wobei erstere vom Meerwasser und Treibmittel im Gleichstrom durchsetzt werden. Derartige Ausführungsformen sind z.B. in dem in der Einleitung zitierten schweizerischen Patentgesuch beschrieben und dargestellt.

Im vorliegenden Fall ist kopfseitig an die Entgasungskolonne 2 eine Einspeiseleitung 6 für zu deoxidierendes Meerwasser angeschlossen, das beispielsweise einen Sauerstoffgehalt von ca. 10 ppm und eine Temperatur von ca. 8°C aufweist und während des Betriebes mit einem Druck von ca. 4 bis 5 bar in die Entgasungskolonne 2 eingeleitet wird und nach seiner Deoxidierung bis zu ca. 10 ppb Sauerstoff durch eine Leitung 7 einer Hochdruckpumpe 8 zugeführt wird, in welcher das Meerwasser auf den erforderlichen Injektionsdruck von beispielsweise 100 bis 250 bar gebracht wird. Durch eine Leitung 9 wird sodann das Hochdruck-Meerwasser in ein Bohrloch injiziert.

Der erforderliche Förderdruck im Kreislauf 1 kann entweder mit Hilfe einer Strahlpumpe 4a erzeugt werden, wobei der durch Leitung 10 zugeführte Treibstrahl deoxidiertes Druckwasser ist. Die Strahlpumpe 4a saugt aus der katalytischen Verbrennungseinrichtung 3 weitgehend von Sauerstoff befreites Treibmittel an und presst dieses in die Entgasungskolonne 2, worin der Sauerstoff des Meerwassers von dem Treibmittel extrahiert wird.

Anstelle der Strahlpumpe 4a kann es jedoch auch z.B. aus wirtschaftlichen Gründen zweckmässig sein, den erforderlichen Förderdruck im Kreislauf 1 mit Hilfe eines Gebläses 4b zu erzeugen.

In der Entgasungskolonne 2 wird während des Betriebes das Treibmittel mit Sauerstoff beladen. An den Kreislauf 1 ist ausgangsseitig von der Entgasungskolonne 2 eine Leitung 11 angeschlossen, die dazu dient, im Falle bei der katalytischen Verbrennung eine zu grosse Menge Kohlendioxid entsteht, eine gewisse Teilmenge des beladenen Treibmittels aus dem Kreislauf zu entfernen. Um den Druck im Kreislauf 1 zu halten und auch gegebenenfalls während des später beschriebenen Anfahrvorganges ist hinter dem Gebläse 4b an den Kreislauf 1 eine Zuleitung 12 für Luft angeschlossen.

Wie bereits eingangs erwähnt, soll die katalytische Verbrennung des Sauerstoffgehaltes des Treibmittels mit Hilfe von Erdgas oder einem Erdgas als Komponente enthaltenden Brenngas erfolgen, welches dem Katalysatorbett der Vorrichtung 3 durch eine Leitung 13 zugeführt wird.

Da bei den gewünschten relativ tiefen Temperaturen jedoch keine Zündung erfolgt, wird der Anfahrprozess erfindungsgemäss in der nachstehenden Weise gestaltet.

Zunächst sei darauf hingewiesen, dass man im allgemeinen bestrebt ist, die Anlage wasserseitig unabhängig von der Erdgas- bzw. Erdölproduktion auszuführen.

Beim Anfahren der Anlage wird analog zum Betrieb Meerwasser mit dem beim Betrieb herrschenden Druck von ca. 4 bis 5 bar in die Entgasungskolonne 2 eingespeist, welches aber, da es während dieser Zeit noch einen zu hohen Sauerstoffgehalt aufweist, nicht injiziert werden darf, sondern es muss verworfen werden.

Zur gleichen Zeit wird entweder die Strahlpumpe 4a oder wenn stattdessen ein Gebläse vorhanden ist, das Gebläse 4b sowie die Heizvorrichtung 5 in Betrieb gesetzt.

Durch die Brenngasleitung 13 wird kein Brenngas in die katalytische Verbrennungsvorrichtung 3 eingeleitet, sondern ein gas- oder dampfförmiger Brennstoff mit einer tieferen Zündtemperatur.

Im vorliegenden Ausführungsbeispiel soll Methanol verwendet werden, welches in geregelter Menge mit Hilfe einer Dosierpumpe 14, nach Verdampfung in einem Verdampfer 15 durch eine, mit der Einspeiseleitung 13 verbundene Leitung 16 in das Katalysatorbett eingeleitet wird.

Die zugeführte Methanolmenge wird so dosiert, dass das Katalysatorbett nicht zu warm wird, was zu einer Zerstörung führen könnte.

Während dieser Phase wird gelöster Sauerstoff in das Kreislauf-Treibmittel gebracht, und zwar dadurch,

3

dass es in der Entgasungskolonne 2 mit strömendem Wasser in Kontakt gebracht wird. Reicht der Sauerstoffgehalt des Treibmittels nicht aus, so kann durch Leitung 12 filtrierte Druckluft nachgespeist werden.

Anstelle der vorstehend beschriebenen Methanolzuführung könnte auch mittels einer Dosierpumpe 17 durch eine, an den Kreislauf 1 angeschlossene Leitung 18 Methanoldampf in geregelter Menge zugeführt werden. In diesem Fall ist kein Verdampfer erforderlich, da der Partialdruck des Methanols in bezug auf die Verhältnisse im Kreislauf 1 so hoch ist, dass es verdampft.

Nachdem während eines Zeitintervalles zunächst ausschliesslich Methanol kontinuierlich ansteigend bis zum Erreichen einer gewünschten Temperatur dem katalytischen Verbrennungsprozess zugeführt worden ist, wird Erdgas durch Leitung 13 als Brenngas zugeführt, und zwar in kontinuierlich ansteigender Menge, während die Methanolzuführung gleichzeitig entsprechend reduziert wird. Sobald die gewünschte Temperatur des Katalysatorbettes erreicht ist, wird die Methanolzufuhr abgestellt und ausschliesslich Erdgas als Brenngas zugeführt, und zwar mit einem gewissen Ueberschuss gegenüber stöchiometrischen Verhältnissen.

Der Sauerstoffgehalt des Treibmittels sinkt nun auf einen sehr tiefen Wert, und der Sauerstoffgehalt des Meerwassers in der Entgasungskolonne 2 wird z.B. auf ca. 10 ppb reduziert.

Nun kann die Injektion des im erforderlichen Masse deoxidierten Meerwassers in Betrieb gesetzt werden.

## Patentansprüche

1. Verfahren zum Anfahren eines Prozesses zum Deoxidieren von Wasser, insbesondere von Meerwasser, welches in Oelfelder eingespritzt wird, wobei während des Betriebes das Wasser zur Entfernung seines Sauerstoffgehaltes mit einem gasförmigen Treibmittel in Kontakt gebracht wird, welches mittels eines Förderorganes im Kreislauf zirkuliert, wobei der Sauerstoff aus dem mit ihm beladenen Treibmittel durch katalytische Verbrennung mittels eines aus Erdgas bestehenden bzw. Erdgas als Komponente enthaltenden Brennstoffes entfernt wird, dadurch **gekennzeichnet**, dass beim Anfahren des Prozesses zum Zünden der katalytischen Verbrennung ein gas- oder dampfförmiger Brennstoff mit einer tieferen Zündtemperatur als der Brennstoff während des Betriebes zugeführt wird.

2. Verfahren nach Anspruch 1, dadurch gekennzeichnet, dass zunächst ausschliesslich der Brennstoff mit der tieferen Zündtemperatur kontinuierlich dem katalytischen Verbrennungsprozess zugeführt wird, und dass nach einem Zeitintervall die Brennstoffzufuhr kontinuierlich gedrosselt und gleichzeitig der aus Erdgas oder mindestens Erdgas als Komponente enthaltende Brennstoff kontinuierlich ansteigend beigemischt wird, bis eine gewünschte Ausgangstemperatur des weitgehend von Sauerstoff befreiten Treibmittels erreicht ist, wobei diese Ausgangstemperatur höher als die Anfahrtemperatur der katalytischen Verbrennung ist, und dass dem katalytischen Verbrennungsprozess sodann ausschliesslich der aus Erdgas oder mindestens Erdgas als Komponente enthaltende Brennstoff zugeführt wird.

3. Verfahren nach Anspruch 1, dadurch gekennzeichnet, dass der zum Anfahren dienende Brennstoff aus dampfförmigem Methanol besteht.

4. Verfahren nach Anspruch 1, dadurch gekennzeichnet, dass der zum Anfahren dienende Brennstoff aus Wasserstoff besteht.

5. Verfahren nach Anspruch 1, dadurch gekennzeichnet, dass das Zünden der katalytischen Verbrennung in einem so tiefen Temperaturbereich erfolgt, in welchem der aus Erdgas bestehende bzw. Erdgas als Komponente enthaltende Brennstoff nicht zündfähig ist.

## Claims

1. A method of starting a process for the deoxidisation of water, more particularly seawater, injected into oil fields, the water being brought into contact with a gaseous propellant during operation in order to remove its oxygen content, the said propellant being circulated in a circuit by a conveying means, the oxygen being removed from the propellant charged therewith by catalytic combustion by means of a fuel consisting of natural gas or containing natural gas as a component, characterised in that a gaseous or vapour fuel having a lower ignition temperature than the fuel during operation is supplied to ignite the catalytic combustion on the start-up of the process.

2. A method according to claim 1, characterised in that initially solely the fuel having the lower ignition temperature is continuously fed to the catalytic combustion process and in that after an interval of time the fuel supply is continuously throttled and at the same time the fuel consisting of natural gas or at least containing natural gas as a component is added in continuously increasing proportions until the propellant from which the oxygen has substantially been removed reaches a required initial temperature, this initial temperature being higher than the start-up temperature of the catalytic combustion, and in that only the fuel consisting of natural gas or at least containing natural gas as a component is then fed to the catalytic combustion process.

3. A method according to claim 1, characterised in that the fuel used for starting consists of methanol in vapour form.

4. A method according to claim 1, characterised in that the fuel used for starting consists of hydrogen.

5. A method according to claim 1, characterised in that ignition of the catalytic combustion takes place in a low temperature range such that the fuel consisting of natural gas or containing natural gas a a component is not capable of ignition.

**Revendications**

1. Procédé de mise en route d'un processus de désoxygénation de l'eau, en particulier d'eau de mer, qui est injectée dans des champs pétrolifères, l'eau étant amenée en contact, pendant le fonctionnement, afin d'éliminer l'oxygène qu'elle contient, avec un agent de propulsion gazeux qui est mis en circulation par,un organe de transport, l'oxygène étant éliminé de l'agent de propulsion contenant celui-ci, par combustion catalytique au moyen d'un combustible constitué de gaz naturel ou contenant du gaz naturel comme constituant, caractérisé en ce que lors de la mise en route du processus, on envoie, pendant le fonctionnement, un combustible gazeux ou à l'état de vapeur présentant une température d'inflammation inférieure à celle du combustible, pour amorcer la combustion catalytique.

2. Procédé selon la revendication 1, caractérisé en ce que l'on envoie en un premier temps, en continu, au procédé de combustion catalytique, exclusivement le combustible à température d'inflammation plus basse et en ce qu'après un intervalle de temps, l'arrivée de combustible est réduite en continu et, simultanément, le combustible constitué de gaz naturel ou contenant au moins du gaz naturel comme constituant, est ajouté en quantité croissant en continu, jusqu'à ce que soit atteinte la température initiale voulue pour l'agent de propulsion pratiquement débarrassé de l'oxygène, cette température initiale étant supérieure à la température de démarrage de la combustion catalytique, et en ce qu'on envoie ensuite au processus de combustion catalytique exclusivement le combustible constitué de gaz naturel ou contenant au moins du gaz naturel comme constituant.

3. Procédé selon la revendication 1, caractérisé en ce que le combustible servant à la mise en route est du méthanol à l'état de vapeur.

4. Procédé selon la revendication 1, caractérisé en ce que le combustible servant à la mise en route est de l'hydrogène.

5. Procédé selon la revendication 1, caractérisé en ce que l'amorçage de la combustion catalytique se produit dans une gamme de températures suffisamment basse pour que le combustible constitué de gaz naturel ou contenant du gaz naturel comme constituant ne soit pas apte à s'enflammer.